# EUROPEAN PATENT APPLICATION

(11) **EP 4 636 380 A1**
(43) Date of publication of application: **22.10.2025**
(21) Application number: 24170327.1
(22) Date of filing: 15.04.2024
(51) Int. Cl.: G01N 1/06

(54) **MICROTOME, DEBRIS COLLECTION MECHANISM FOR A MICROTOME, AND METHOD FOR DEBRIS COLLECTION IN A MICROTOME**

(71) Applicant: ConnectomX Ltd, Oxford OX2 9BG (GB)
(72) Inventor: SEARLE, Stuart David, Oxford (GB); CHENG, Cheng, Oxford (GB)
(74) Representative: Balder IP Law, S.L.

(57) **Abstract**

A debris collection mechanism (1) for a microtome for an electron microscope or an ion beam microscope, the debris collection mechanism (1) comprising: a support structure (2) that is configured to be attached to the microtome or be part of the microtome; a tape transport mechanism (3) which is attached to the support structure (2), comprises a supply spool (4), a take-up spool (5) and a tongue (6), and is configured to stepwise transport an adhesive tape (7) from the supply spool (4) to the take-up spool (5) such that during its transport the adhesive tape (7) passes slidably by the tongue (6); a motion mechanism (8) which is attached to the support structure (2) and is configured to force the tape transport mechanism (3) to stepwise transport the adhesive tape (7). Also, a microtome, and a method for debris collection in a microtome.

## Description

### TECHNICAL FIELD

The present invention relates to a debris collection mechanism for a microtome for a microscope which may be an electron microscope or an ion beam microscope. The microtome may preferably be attachable to, or integrated with, the microscope. The present invention further relates to a microtome comprising said debris collection mechanism. The present invention further relates to a method for debris collection in a microtome. Also, the present invention relates to a microscope comprising a microtome that comprises said debris collection mechanism.

### STATE OF THE ART

Microtomes, and especially ultramicrotomes, are important and widely used instruments for cutting extremely thin sections of material for examination under a microscope, e.g. an electron or ion beam microscope. There are also known microtomes which are used within an electron or ion beam microscope for cutting away layers from the top of a sample located within the microscope, such that the newly exposed surface of the sample after each cut can be observed with the microscope. This may be used, for example, for performing a block-face imaging of the sample. However, during the use of the microtome, the cutting of the sample may produce debris which may contaminate the exposed surface, the microscope and/or the microtome, thereby detrimentally affecting the quality the images or other measurements being acquired with the microscope. For example, in an electron microscope the accumulation of debris on the parts of the microscope close to the sample and to the electron beam that is used for irradiating the sample, may detrimentally affect the quality of the images being taken due to the possible charging of said debris during the operation of the microscope. Also, said debris may cause a cross-contamination between different samples. For example, during the use of a microtome that comprises a blade for cutting the sample, the debris that may be created by the cutting of the sample, may be transferred to the blade, and from the blade may subsequently be transferred to the same or to a different sample. Hence, for avoiding said (cross)contamination, it may be useful to clean the blade of the microtome or, more generally, collect said debris. There are known conventional microtomes for microscopes that employ cleaning a blade of the microtome. Patent document EP 3 143 376 B1 describes a microtome device for use in block-face imaging, and further describes cleaning a blade of the microtome with a Styrofoam cleaning rod.

Although cleaning the blade of a microtome that is used in an electron microscope is known, a problem with the conventional systems is that they do not adequately prevent the contamination of the sample or of the microscope, nor adequately prevent the cross contamination between different samples that may be processed with the same microtome. Importantly, said conventional systems do not collect the debris in a way that sufficiently prevents the contamination parts of the microscope close to the sample. Therefore, said convention systems do not sufficiently prevent the detrimental effects that the presence and accumulation of debris on or close to the surface of the sample may have on the quality of the images or other measurements acquired with the microscope.

### DESCRIPTION OF THE INVENTION

The present invention overcomes the drawbacks of the conventional microtomes for electron microscopes or for ion beam microscopes. The present invention advantageously allows for preventing the accumulation of debris on the blade, the sample and the microscope. In particular, the present invention allows for avoiding the accumulation of debris close to the area of the sample being imaged or measured with the microscope. Hence, the present invention advantageously allows for avoiding or preventing detrimental effects that the accumulation of debris on or close to the sample may have on the quality of the measurements being performed with the microscope. Moreover, advantageously the present invention may be easily implemented without an excessive cost.

A first aspect of the invention concerns a debris collection mechanism for a microtome for an electron microscope or an ion beam microscope, the debris collection mechanism comprising: a support structure, a tape transport mechanism, and a motion mechanism. The support structure is configured to be attached to the microtome or to be part of the microtome. The tape transport mechanism is attached to the support structure. Also, the tape transport mechanism comprises a supply spool, a take-up spool, and a tongue. Also, the tape transport mechanism is configured to stepwise transport an adhesive tape from the supply spool to the take-up spool such that during its transport the adhesive tape passes slidably by the tongue. The motion mechanism is attached to the support structure and is configured to force the tape transport mechanism to stepwise transport the adhesive tape.

The debris collection mechanism of the present invention may advantageously be used for collecting with the adhesive tape debris which may be created during the cutting of a sample by the microtome. Moreover, the debris collection mechanism may advantageously allow for transporting the collected debris away from the sample so that these debris do not contaminate the microscope or the sample or other samples. Moreover, during a use of the debris collection mechanism, the stepwise transport of the adhesive tape from the supply spool to the take-up spool may advantageously allow for preferably collecting the debris with a clean part of the tape, thereby further preventing the contamination of the sample, the microscope and/or the microtome. Hence, it may be understood that the debris collection mechanism may also advantageously prevent the detrimental effects that the accumulation of debris close to the sample may have on the quality of the imaging or other measurements which may be performed on the sample. Also, advantageously some embodiments of the present invention may allow for upgrading and improving the functionality of existing microtomes. In particular, in the optional case that the support structure is configured to be functionally attached to the microtome, the debris collection mechanism may advantageously allow for upgrading the microtome by adding to the latter a debris collection functionality.

The tape transport mechanism may be configured to be movable with respect to the support structure, or may be stationary with respect to the support structure. Hence, in a preferred embodiment, the tape transport mechanism is stationary with respect to the support structure. In the latter case, the tape transport mechanism, in particular the tongue, may preferably be configured, e.g. be shaped and/or positioned, so that during a use of the debris collection mechanism in the microtome, the tape passing by the tongue may contact a blade of the microtome. This for example may occur in the optional case that the microtome comprises a blade that moves for cutting the sample such that during the movement of the blade the latter comes into contact with the tape passing by the tongue during an operation of the microtome and the debris collection mechanism. In the latter case, the contacting of the tape with the blade may allow the tape to collect debris from the blade. It is noted that preferably, tongue is a cantilever, or the tape transport mechanism comprises a cantilever. In the latter optional and preferable case the tongue is at, or is, an end of the cantilever, more preferably the cantilever protruding from the support structure with said end being away from the support structure.

In a very preferred embodiment of the first aspect of the invention, the tape transport mechanism is movably attached to the support structure, and the motion mechanism is also configured to move the tape transport mechanism between a collection position and a retract position with respect to support structure. Said collection position may preferably be such that, when the debris collection mechanism is used with a microtome that comprises a blade, and during an operation of the debris collection mechanism, when the tape transport mechanism is at the collection position, the tape passing by the tongue may contact the blade of the microtome. This may advantageously allow said tape to collect debris from the blade. In the latter case, also advantageously, the possible moving of the tape transport mechanism from the collection position to the retract position may allow for further moving the collected debris away from the sample, for thereby further preventing the possible negative effects that a presence of said debris close to the sample may have. Therefore, in a preferred embodiment which is according to the aforementioned very preferred embodiment, the support structure, and the tape transport mechanism is arranged such that, when the debris collection mechanism is used together with the microtome, at the collection position the tongue is adjacent to a blade of the microtome such that the adhesive tape which passes by the tongue can collect debris from the blade, and at the retract position the tongue is away from the blade.

In a preferred embodiment which is according to the aforementioned very preferred embodiment, the tape transport mechanism comprises a movable shuttle on which there are attached the supply spool, the take-up spool and the tongue; and the motion mechanism is configured to move the movable shuttle between the retract position and the collection position. This configuration may advantageously allow for moving the tape transport mechanism is a simple yet robust and reliable manner, by simply moving the shuttle.

In a preferred embodiment, hereafter referred to as "exemplary embodiment", which is according to the aforementioned very preferred embodiment, the motion mechanism comprises a pusher and a motor which is connected to the tape transport mechanism; the motor is configured to move the tape transport mechanism from the retract position to the collection position, and to retract the tape transport mechanism from the collection position to the retract position; the pusher is fixed on the support structure and configured to push a pushable part (i.e. part that can be pushed) of the tape transport mechanism when the latter is being retracted to the retract position, and thereby, cause the tape transport mechanism to stepwise transport the adhesive tape by at least one step. Said motor may also be called first motor to distinguish from any other motor (e.g. the second motor mentioned further below) that the debris collection mechanism may optionally comprise. Preferably said (first) motor is a piezo slip-stick motor or a leadscrew motor which comprises a leadscrew connected to the transport mechanism. The configuration of the exemplary embodiment may advantageously enable moving the transport mechanism reliably and accurately. The pusher may also be called "index finger" or "drive".

In a preferred embodiment which is according to the aforementioned exemplary embodiment, the tape transport mechanism comprises a guide roller, and part of said guide roller is a first ratchet wheel; the guide roller is arranged and configured to contact an adhesive part of the adhesive tape and guide the adhesive tape such that the adhesive tape passes over the guide roller in a tortuous route; and the first ratchet wheel is the pushable part and, when pushed by the pusher, is configured to be rotated with the rest of the guide roller to move the adhesive tape. Hence, a rotational step of the first ratchet wheel may correspond to a respective transport step of the tape. This configuration advantageously enables using the tape transport mechanism's movement between the collection position and the retract position, for also achieving a step-wise transport of the tape, as well as achieving the tape being tensioned during said step-wise transport. Moreover, said configuration, and in particular the use of the first ratchet wheel, may advantageously achieve advancing the tape by a same amount/length each time, regardless of the spool size. Said amount or length by which the tape may be advanced may be defined by the number of the ratchet steps by which the first ratchet wheel may rotate when it is pushed by the pusher. Advancing the adhesive tape by the same amount each time is useful because it minimizes consumption of the tape. Preferably said amount or length of tape may be set by driving the shuttle to a different retract position such that the pusher may push and turn the first ratchet wheel by a different amount. For this reason, in a preferred embodiment which is according to the previous one, the retract position is one of a plurality of retract positions, and the motion mechanism is configured to controllably move the movable shuttle between the collection position and any one of the plurality of retract positions. Also, preferably the tape transport mechanism further comprises a first ratchet pawl engaging the first ratchet wheel. Said first ratchet pawl may advantageously prevent a reverse rotation of the guide roller with respect to a direction of rotation caused by the pushing of the first ratchet wheel by the pusher.

In some preferred embodiments of the first aspect of the invention, the debris collection mechanism comprises the aforementioned guide roller, and also comprises a motor that is configured to rotate said guide roller. More preferably, said motor is configured to rotate said guide roller by a controllable angular displacement, for thereby achieving controlling and varying the transport/travel/displacement length of the tape at each step. Said motor may also be called second motor to distinguish from any other motor (e.g. the aforementioned first motor) that the debris collection mechanism may optionally comprise. Also, said (second) may preferably be a piezo slip-stick motor or a leadscrew motor. Also, it may be understood that in the optional case that the debris collection comprises said guide roller and (second) motor, it may or may not comprise any of optional pusher and/or movable shuttle which are mentioned further above in relation to some embodiments.

In a preferred embodiment which comprises the aforementioned optional guide roller, the tape transport mechanism further comprises an anti-slip roller arranged and configured to contact an adhesive side of the adhesive tape and to press the adhesive tape against the guide roller for preventing the adhesive tape from slipping over the guide roller. Hence, the anti-slip roller may advantageously result to the tape being tensioned, and may also advantageously further improve the reliability and operation of debris collection mechanism by preventing an uncontrollable slipping of the tape during said operation. Preferably, said anti-slip roller is made of one or more materials suitable for use in vacuum, for example the vacuum under which a sample is typically studied in an electron or ion beam microscope. A non-limiting example of said materials is polytetrafluoroethylene. Hence, in a preferred embodiment which is according to the previous one, the anti-slip roller is made, at least partially, of polytetrafluoroethylene.

In a preferred embodiment of the first aspect of the invention, the debris collection mechanism further comprises the adhesive tape arranged on the tape transport mechanism. Preferably the adhesive tape is a single-sided adhesive tape which comprises an adhesive surface which is exposed as the adhesive tape passes slidably by the tongue. More preferably said tongue comprises two ridges configured such that the adhesive tape is suspended between the two ridges with the exposed adhesive surface between the ridges facing away from the tongue when the adhesive tape passes slidably by the tongue. The latter optional configuration may advantageously facilitate delimiting the size of an area of the adhesive tape with which said tape may collect debris at a moment during an operation of the debris collection mechanism. For example, the adhesive surface between the ridges may preferably be used for collecting debris, e.g. debris from a blade of the microtome, at a moment during an operation of the debris collection mechanism.

In a preferred embodiment which is according to the aforementioned exemplary embodiment, the tape transport mechanism further comprises a second ratchet wheel which is integrated with or attached to the take-up spool; the motion mechanism comprises a tensioning spring which is configured to engage and push the second ratchet wheel when the tape transport mechanism is retracted to the retract position, and thereby, cause the tape transport mechanism to tension the adhesive tape, preferably the tape transport mechanism also comprising a second ratchet pawl engaging the second ratchet wheel. It is noted that during an operation of the previous preferred embodiment, the second ratchet wheel may need to turn by a different amount at the start of a winding of the tape on the take-up spool, compared at the end of said winding, because the diameter of the spool of tape winded on the take-up spool progressively increases during said operation. Therefore, advantageously the tensioning spring may try to rotate the wheel by a larger amount than what may be required, so that the wheel simply stops turning when the tape is tight. It is noted that in a preferred embodiment that comprises the aforementioned first ratchet wheel and second ratchet wheel, the second ratchet wheel is larger in diameter than the first ratchet wheel.

In a very preferred embodiment of to the first aspect of the invention, the debris collection mechanism is configured to fit inside and be used with the microscope. Preferably said microscope is a scanning electron microscope.

A second aspect of the invention concerns a microtome which is attachable to an electron microscope or to an ion beam microscope, the microtome comprising a debris collection mechanism which is according to first aspect of the invention. Preferably the microtome is configured to fit inside, or be integrated into, or be part of, the microscope.

A third aspect of the invention concerns a method for debris collection in a microtome, the method comprising: using a microtome; using a debris collection mechanism which is according to the first aspect of the invention and is attached to or is part of said microtome; forcing the tape transport mechanism to stepwise transport the adhesive tape from the supply spool to the take-up spool such that during transport (i.e. the tape's transport) the adhesive tape passes adjacently by the tongue. It may be understood that any of the aforementioned embodiments of the first aspect of the invention may be used for implementing the method of the third aspect of the invention.

In a preferred embodiment of the third aspect of the invention, the method step of using the microtome comprises: with a blade of the microtome, cutting a sample located on a sample holder, thereby generating debris located on a surface of the blade. In a very preferred embodiment of the third aspect of the invention, the method further comprises moving the tape transport mechanism between a retract position and a collection position with respect to the support structure and/or the sample. More preferably, the step of moving the tape transport mechanism between the retract position and the collection position comprises: moving the tape transport mechanism to the collection position at which the tongue is adjacent to the surface of the blade such that the debris adhere to the adhesive tape which slidably passes by said tongue, and subsequently, moving the tape transport mechanism from the collection position to the retract position, thereby moving the tongue and the adhesive tape away from the blade; and the step of forcing the tape transport mechanism to stepwise transport the adhesive tape occurs when moving the tape transport mechanism to the retract position such that a used part of the adhesive tape, said used part having adhered thereon the debris, moves away from an edge of the tongue, and an unused part of the tape moves towards said edge of the tongue.

In a preferred embodiment which is according to the aforementioned very preferred embodiment of the third aspect of the invention, the microtome is used within an electron microscope with which the sample is being examined while being on the sample holder; using the microtome comprises moving the blade with respect to sample holder for cutting the sample; moving the tape transport mechanism comprises moving the tongue with respect to both the sample holder and the blade.

A fourth aspect of the invention concerns a microscope that comprises the microtome of the second aspect of the invention, wherein said microscope is an electron microscope or an ion beam microscope.

It may be understood that any optional or preferable features mentioned herein with respect to the first aspect of the invention, may correspond to respective optional or preferably features of the first, second, third or further aspect of the invention, and vice versa.

Additional advantages and features of the invention will become apparent from the detailed description that follows and will be particularly pointed out in the appended claims.

### BRIEF DESCRIPTION OF THE DRAWINGS

To complete the description and in order to provide for a better understanding of the invention, a set of drawings is provided. Said drawings form an integral part of the description and illustrate embodiments of the invention, which should not be interpreted as restricting the scope of the invention, but just as examples of how the invention can be carried out. The drawings comprise the following figures:
Fig. 1 illustrates a preferred embodiment of a debris collection mechanism according to the invention.
Fig. 2 illustrates a cross section of the embodiment of Fig. 1.
Fig. 3 illustrates a side view of a part of the embodiment of Fig. 1 during a use of said embodiment.
Fig. 4 illustrates a top view of an embodiment of Fig. 1.
Fig. 5 schematically illustrates a flow diagram of a preferred embodiment of a method according to the invention.

### DESCRIPTION OF A WAY OF CARRYING OUT THE INVENTION

The following description is not to be taken in a limiting sense but is given solely for the purpose of describing the broad principles of the invention. Next embodiments of the invention will be described by way of example, with reference to the above-mentioned drawings, showing methods and products according to the invention, and some related results.

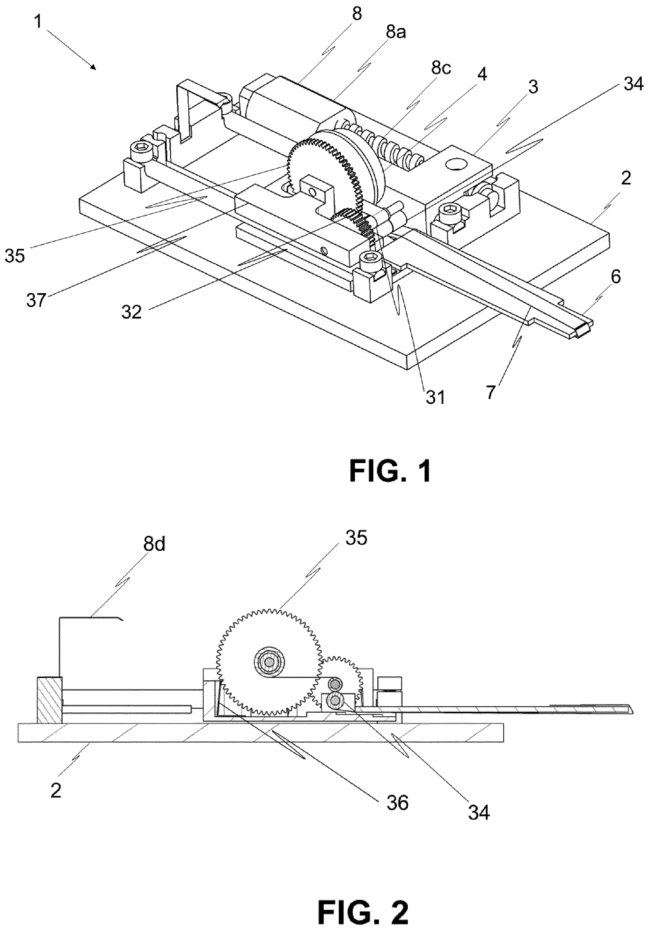

A preferred embodiment of a debris collection mechanism of the first aspect of the invention is explained next with reference to Fig. 1-4. The debris collection mechanism 1 of Fig. 1-4 is for a microtome that can fit inside, and can be used with, a microscope that is an electron microscope and/or an ion beam microscope. Specifically, the debris collection of Fig. 1-4 may be attached to, or be integrated with, said microscope. Also, the debris collection mechanism 1 comprises a support structure 2, a tape transport mechanism 3 and a motion mechanism 8.

The support structure 2 is configured to be attached to the microtome or be part of the microtome. For this purpose, the support structure of the embodiment of Fig. 1 is shaped as a platform that can be placed on a surface (not shown) of a microtome. The tape transport mechanism 3 of the embodiment of Fig. 1-4 is attached to the support structure 2 and comprises a supply spool 4, a take-up spool 5 and a tongue 6. Also, the tape transport mechanism 3 is configured to stepwise transport an adhesive tape 7 from the supply spool 4 to the take-up spool 5 such that during its transport the adhesive tape 7 passes slidably by the tongue 6. In the embodiment of Fig. 1-4 the debris collection mechanism 1, more specifically the transport mechanism 3, comprises a cantilever 40, and the tongue 6 is at an end of the cantilever 40. The motion mechanism 8 is movably attached to the support structure 2 and is configured to force the tape transport mechanism 3 to stepwise transport the adhesive tape 7.

Moreover, the tape transport mechanism 3 of the embodiment of Fig. 1-4 comprises a movable shuttle 37 on which there are attached the supply spool 4, the take-up spool 5 and the tongue 6. Also, the motion mechanism 8 of the embodiment of Fig. 1-4 is also configured to move the tape transport mechanism 3 between a collection position and a retract position with respect to (i.e. with reference to) the support structure. More specifically, the motion mechanism 8 is configured to move the movable shuttle 37 between the retract position and the collection position. Said retract position may be one of a plurality of retract positions, in which case the motion mechanism can be configured to controllably move the movable shuttle 37 between the collection position and any one of the plurality of retract positions.

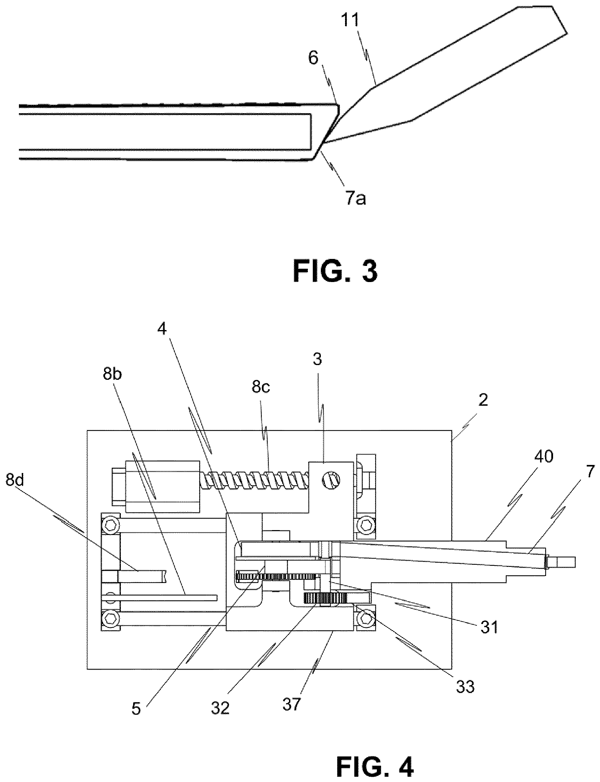

Also, in the embodiment of Fig. 1-4, the support structure 2 and the tape transport mechanism 3 are arranged such that, when the debris collection mechanism 1 is used with the microtome, at the collection position the tongue 6 is adjacent to a blade 11 of the microtome, as shown in Fig. 3, such that the adhesive tape 7 which passes by the tongue 6 can collect debris from the blade 11, and at the retract position the tongue 6 is away from the blade 11. It is noted that said blade 1 may also move and approach or move away from the tongue. Also, in some other embodiments the tongue of the debris collection mechanism is stationary with respect to the support structure.

Also, in the embodiment of Fig. 1-4, the motion mechanism 8 comprises a pusher 8b and a motor 8a which is connected to the tape transport mechanism 3. Said pusher may also be called index finger. The motor 8a is configured to move the tape transport mechanism 3 from the retract position to the collection position, and to retract the tape transport mechanism 3 from the collection position to the retract position. The pusher 8b is firmly fixed on the support structure 2 and is configured to push a pushable part of the tape transport mechanism 3 when the latter is being retracted to the retract position. It may be understood that the pusher 8b is stationary with respect to the support structure 2. When said pusher 8b pushes the pushable part can cause the tape transport mechanism 3 to stepwise transport the adhesive tape 7 by at least one step. In the embodiment of Fig. 1-4 the motor 8a is a piezo a leadscrew motor which comprises a leadscrew 8c connected to the transport mechanism 3. Alternatively, said motor may be slip-stick motor or another type of motor.

Moreover, in the embodiment of Fig. 1-4 the tape transport mechanism 3 comprises a guide roller 31. A part of said guide roller 31 is a first ratchet wheel 32. Also, the guide roller 31 is arranged and configured to contact an adhesive surface 7a of the adhesive tape 7 and guide the adhesive tape 7 such that the latter passes over the guide roller 31 in a tortuous route, as shown in Fig. 1. In addition, in the embodiment of Fig. 1-4 the first ratchet wheel 32 is the aforementioned pushable part and when pushed by the pusher 8b is configured to be rotated with the rest of the guide roller 31 in order to move the adhesive tape 7. Hence, it can be understood that Fig. 1-4 illustrate the debris collection mechanism 1 in a state where the tape transport mechanism 3 is at the collection position where the first ratchet wheel 32 is away from the pusher 8b (index finger). It may also be understood, that when the tape transport mechanism is moved towards the retract position (not shown) the first ratchet wheel 32 approaches the pusher 8b which will push the first ratchet wheel 32 when the tape transport mechanism is brought at the retract position. Also, the tape transport mechanism 3 of Fig. 1-4 further comprises a first ratchet pawl 33 which engages the first ratchet wheel 32.

In the embodiment of Fig. 1-4, the tape transport mechanism 3 further comprises an anti-slip roller 34 which is arranged and configured to contact an adhesive side of the adhesive tape 7. Said anti-slip roller is also arranged and configured to press the adhesive tape 7 against the guide roller 31 for preventing the adhesive tape 7 from slipping over the guide roller. The anti-slip roller 34 may preferably be made of polytetrafluoroethylene or another material that has a low degassing rate under the vacuum under which a sample is typically imaged in an electron microscope.

Fig. 1-4 show the adhesive tape 7 on the arranged on the tape transport mechanism 3. Preferably the adhesive tape 7 is a single-sided adhesive tape, i.e. a tape wherein only one side/surface 7a of the tape is adhesive, and the other side of the tape is not adhesive. During an operation of the embodiment of Fig. 1-4, the adhesive surface 7a of the tape 7 is exposed as the adhesive tape 7 passes slidably by the tongue 6. Also, in the embodiment of Fig. 1-4, the tongue 6 comprises two ridges configured such that the adhesive tape is suspended between the two edges with the exposed adhesive surface 7a between the ridges facing away from the tongue when the adhesive tape 7 passes slidably by the tongue 6, so that said adhesive surface 7a can collect debris from the blade 11 as shown in Fig. 3.

The tape transport mechanism 3 of the embodiment of Fig. 1-4 further comprises a second ratchet wheel 35 which is integrated with the take-up spool 5. The motion mechanism 8 also comprises a tensioning spring 8d which is configured to engage and push the second ratchet wheel 35 when the tape transport mechanism 3 is retracted to the retract position. The tensioning spring 8d by engaging the second ratchet wheel 35 can cause the tape transport mechanism 3 to tension the adhesive tape 7. The tape transport mechanism 3 also comprises a second ratchet pawl 36 engaging the second ratchet wheel 35. The second ratchet pawl can prevent a reverse rotation of the second ratchet wheel 35.

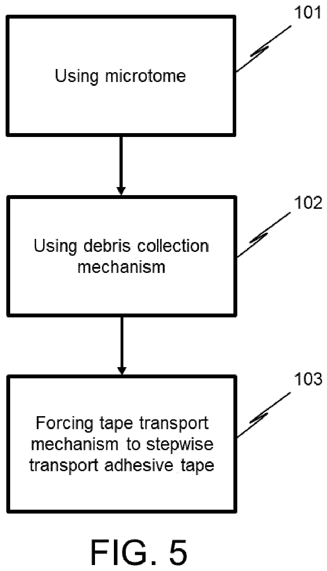

The flow diagram of a preferred embodiment of a method for debris collection according to the invention, is shown in Fig. 5. The embodiment of Fig. 5 comprises the following steps:
Step 101: using a microtome;
Step 102: using the debris collection mechanism 1 of Fig. 1-4, wherein said debris collection mechanism 1 is attached to the microtome;
Step 103: forcing the tape transport mechanism 3 to stepwise transport the adhesive tape 7 from the supply spool 4 to the take-up spool 5 such that during transport the adhesive tape 7 passes adjacently by the tongue 6.

It is noted that steps 101-103 may be executed in a different order compared to the one indicated in Fig. 5. For example, step 103 may be done before step 101, and/or step 102 may be done before step 101.

Preferably, step 101 comprises using a blade 11 of the microtome to cut a sample located on a sample holder. The cutting of the sample may produce debris located on a surface of the blade 11, and said debris may be collected in step 102.

In a preferred embodiment that is according to the one of Fig. 5, the method also comprises the step of moving the tape transport mechanism 3 between a retract position and a collection position with respect to the support structure and the sample holder. More preferably said step of moving the tape transport mechanism 3 between a retract position and a collection position comprises the following sub-steps:
First sub-step: moving the tape transport mechanism 3 to the collection position at which the tongue 6 is adjacent to the surface of the blade 11 such that the debris adhere to the adhesive tape 7 which slidably passes by said tongue 6; and subsequently,
Second sub-step: moving the tape transport mechanism 3 from the collection position to the retract position, thereby moving away the tongue 6 and the adhesive tape 7 from the blade 11.

The aforementioned first sub-step may be part of step 102, and the aforementioned second sub-step may be part of step 103. Hence, in an preferred embodiment which is according to one of Fig. 5 and comprises the aforementioned first and second sub-steps, step 103 occurs when moving the tape transport mechanism 3 to the retract position such that a used part of adhesive tape 7, said used part having adhered thereon the debris, moves away from an edge of the tongue 6, and an unused part of the tape moves towards said edge of the tongue 6.

In a preferred embodiment which is according to the previous one, and wherein step 101 comprises using a blade 11 of the microtome to cut a sample located on a sample holder, the following also apply:
- in step 101 the microtome is used within an electron microscope with which the sample is being examined while being on a sample holder;
- step 101 comprises moving the blade with respect to sample holder for cutting the sample;
- moving the tape transport mechanism 3 comprises moving the tongue with respect to both the sample holder and the blade.

It is noted that although in some of the aforementioned embodiments the tongue of the tape transport mechanism is movable with respect to the support structure, in some preferred embodiments the tape transport mechanism 3 as a whole, and in particular the tongue 6, is at a stationary position with respect to the support structure 2 and/or to a sample holder in the microtome. In the latter case, when the debris collection mechanism is used with a microtome, during an operation of the microtome for cutting a sample, a blade of the microtome may move with respect to both the sample (or the sample holder) and the tongue, to approach or move away from the tongue.

A preferred embodiment of the second aspect of the invention is an ultramicrotome that comprises the embodiment of Fig. 1-4 and is configured to process a sample in a scanning electron microscope (SEM) to perform the technique of 'Serial block-face Scanning electron microscopy' (SBFSEM). In said SBFSEM technique, 3D data is acquired as a series of images at different depths through a sample. This may be achieved by placing the ultramicrotome inside the vacuum chamber of the SEM. The ultramicrotome comprises a diamond knife which cuts away layers (as thin as 10 nm) from the top of the sample. After each cut, the newly exposed surface is imaged in the SEM using back-scattered electrons. A main application of this technique is in biology research where it is used to understand cells, tissues and organ functions in greater detail. Said ultramicrotome also comprises a sample stage where the sample moves in a Z direction. This may be achieved by a walking piezo motor coupled with an optical encoder with nanometer resolution. The range of this movement may determine how thick the sample can be studied. The resolution of the movement in this direction may determine the thinnest slice that can be cut. Said ultramicrotome also comprises a blade that is a diamond knife mounted on the top of a pivoting arm and driven by an amplified piezo actuator, to provide the cutting movement and also to return the knife to a clear position while imaging with an electron beam. The amplified piezo actuator may provide a displacement of 800 µm (micrometers) which is further amplified by the pivoting arm to 1.3 mm. The diamond knife is held in a knife holder which is fitted with a block piezo actuator driven by a sinusoidal signal. This allows the diamond knife to oscillate at a certain frequency during the cut, which helps reduce the cutting force and can give better thin cutting performance. In order to place the ultramicrotome inside the vacuum chamber of an SEM, the ultramicrotome is compact to fit inside a microscope stage of the SEM.

In this text, the term "comprises" and its derivations (such as "comprising", etc.) should not be understood in an excluding sense, that is, these terms should not be interpreted as excluding the possibility that what is described and defined may include further elements, steps, etc.

The invention is obviously not limited to the specific embodiment(s) described herein, but also encompasses any variations that may be considered by any person skilled in the art (for example, as regards the choice of materials, dimensions, components, configuration, etc.), within the general scope of the invention as defined in the claims.

## Claims

1. A debris collection mechanism (1) for a microtome for an electron microscope or an ion beam microscope, the debris collection mechanism (1) comprising:
a support structure (2) that is configured to be attached to the microtome or be part of the microtome;
a tape transport mechanism (3) which is attached to the support structure (2), comprises a supply spool (4), a take-up spool (5) and a tongue (6), and is configured to stepwise transport an adhesive tape (7) from the supply spool (4) to the take-up spool (5) such that during its transport the adhesive tape (7) passes slidably by the tongue (6);
a motion mechanism (8) which is attached to the support structure (2) and is configured to force the tape transport mechanism (3) to stepwise transport the adhesive tape (7).

2. A debris collection mechanism (1) according to claim 1, wherein the tape transport mechanism (3) is movably attached to the support structure (2), and the motion mechanism (8) is also configured to move the tape transport mechanism (3) between a collection position and a retract position with respect to support structure (2).

3. A debris collection mechanism (1) according to claim 2, wherein the tape transport mechanism (3) comprises a movable shuttle (37) on which there are attached the supply spool (4), the take-up spool (5) and the tongue (6); and
the motion mechanism (8) is configured to move the movable shuttle (37) between the retract position and the collection position, preferably the retract position being one of a plurality of retract positions, and more preferably the motion mechanism being configured to controllably move the movable shuttle between the collection position and any one of the plurality of retract positions with respect to the support structure (2).

4. A debris collection mechanism (1) according to any of claims 2-3, wherein the support structure (2) and the tape transport mechanism (3) are arranged such that, when the debris collection mechanism (1) is used with a microtome, at the collection position the tongue (6) is adjacent to a blade (11) of the microtome such that the adhesive tape (7) which passes by the tongue (6) can collect debris from the blade (11), and at the retract position the tongue (6) is away from the blade (11).

5. A debris collection mechanism (1) according to any of claims 2-4, wherein the motion mechanism (8) comprises a pusher (8b) and a motor (8a) which is connected to the tape transport mechanism (3);
the motor (8a) is configured to move the tape transport mechanism (3) from the retract position to the collection position, and to retract the tape transport mechanism (3) from the collection position to the retract position;
the pusher (8b) is fixed on the support structure and configured to push a pushable part of the tape transport mechanism (3) when the latter is being retracted to the retract position, and thereby, cause the tape transport mechanism (3) to stepwise transport the adhesive tape (7) by at least one step, preferably the motor (8a) being a piezo slip-stick motor or a leadscrew motor which comprises a leadscrew (8c) connected to the transport mechanism (3).

6. A debris collection mechanism (1) according to claim 5, wherein the tape transport mechanism (3) comprises a guide roller (31), wherein part of said guide roller (31) is a first ratchet wheel (32);
the guide roller (31) is arranged and configured to contact an adhesive surface (7a) of the adhesive tape (7) and guide the adhesive tape (7) such that the adhesive tape (7) passes over the guide roller (31) in a tortuous route;
and the first ratchet wheel (32) is the pushable part and is configured to be rotated with the rest of the guide roller (31) to move the adhesive tape (7) when pushed by the pusher (8b), preferably the tape transport mechanism further comprising a first ratchet pawl (33) engaging the first ratchet wheel (32).

7. A debris collection mechanism (1) according to claim 6, wherein the tape transport mechanism (3) further comprises an anti-slip roller (34) arranged and configured to contact an adhesive side of the adhesive tape (7) and press the adhesive tape (7) against the guide roller (31) for preventing the adhesive tape (7) from slipping over the guide roller, preferably the anti-slip roller (34) being made of polytetrafluoroethylene.

8. A debris collection mechanism (1) according to any of the previous claims, further comprising the adhesive tape (7) arranged on the tape transport mechanism (3), preferably the adhesive tape (7) being a single-sided adhesive tape comprising an adhesive surface (7a) which is exposed as the adhesive tape (7) passes slidably by the tongue (6), more preferably the tongue comprising two ridges configured such that the adhesive tape is suspended between the two edges with the exposed adhesive surface (7a) between the ridges facing away from the tongue when the adhesive tape (7) passes slidably by the tongue (6).

9. A debris collection mechanism (1) according to any of claims 2-8, wherein the tape transport mechanism (3) further comprises a second ratchet wheel (35) which is integrated with or attached to the take-up spool (5);
the motion mechanism (8) comprises a tensioning spring (8d) which is configured to engage and push the second ratchet wheel (35) when the tape transport mechanism (3) is retracted to the retract position, and thereby, cause the tape transport mechanism (3) to tension the adhesive tape (7), preferably the tape transport mechanism (3) also comprising a second ratchet pawl (36) engaging the second ratchet wheel (35).

10. A debris collection mechanism (1) according to any of the preceding claims, wherein the debris collection mechanism is configured to fit inside and be used with the microscope, preferably the microscope being a scanning electron microscope.

11. A microtome which is attachable to an electron microscope or an ion beam microscope, the microtome comprising a debris collection mechanism (1) which is according to any of the preceding claims.

12. A microtome according to claim 11, wherein the microtome is configured to fit inside or be integrated into or be part of the electron microscope or the ion beam microscope.

13. A method for debris collection in a microtome, comprising the steps of:
using a microtome;
using a debris collection mechanism (1) which is according to any of claims 1-10 and is attached to or is part of said microtome;
forcing the tape transport mechanism (3) to stepwise transport the adhesive tape (7) from the supply spool (4) to the take-up spool (5) such that during transport the adhesive tape (7) passes adjacently by the tongue (6).

14. A method according to claim 13, wherein the step of using the microtome comprises, with a blade (11) of the microtome, cutting a sample located on a sample holder, thereby generating debris located on a surface of the blade (11);
preferably the method further comprises moving the tape transport mechanism (3) between a retract position and a collection position with respect to the support structure (2);
more preferably the step of moving the tape transport mechanism (3) between a retract position and a collection position comprises:
moving the tape transport mechanism (3) to the collection position at which the tongue (6) is adjacent to the surface of the blade (11) such that the debris adhere to the adhesive tape (7) which slidably passes by said tongue (6), and subsequently,
moving the tape transport mechanism (3) from the collection position to the retract position, thereby moving away the tongue (6) and the adhesive tape (7) from the blade (11);
and
the step of forcing the tape transport mechanism (3) to stepwise transport the adhesive tape (7) occurs when moving the tape transport mechanism (3) to the retract position such that a used part of adhesive tape (7), said used part having adhered thereon the debris, moves away from an edge of the tongue (6), and an unused part of the tape moves towards said edge of the tongue (6).
15. A method according to claim 14, wherein the microtome is used within an electron microscope with which the sample is being examined while being on the sample holder;
using the microtome comprises moving the blade with respect to the sample holder for cutting the sample;
moving the tape transport mechanism (3) comprises moving the tongue (6) with respect to both the sample holder and the blade (11).
